# EUROPÄISCHE PATENTSCHRIFT

(11) **EP 1 165 348 B1**
(45) Veröffentlichungstag und Bekanntmachung des Hinweises auf die Patenterteilung: **08.01.2003**
(21) Anmeldenummer: 00914100.3
(22) Anmeldetag: 01.03.2000
(51) Int. Cl.: B60R 21/01, B60K 28/16, B60K 28/14

(54) **VORRICHTUNG ZUR ERHÖHUNG DER SICHERHEIT BEI EINEM FAHRZEUG**
DEVICE FOR INCREASING THE SECURITY OF A MOTOR VEHICLE
DISPOSITIF PERMETTANT D'AUGMENTER LA SECURITE D'UN VEHICULE

(30) Priorität: 19.03.1999 DE 19912331; 19.03.1999 DE 19912332
(43) Veröffentlichungstag der Anmeldung: 02.01.2002
(73) Patentinhaber: Bayerische Motoren Werke Aktiengesellschaft, 80809 München (DE)
(72) Erfinder: EHRMAIER, Rudolf, D-81927 München (DE); NEUNER, Josef, D-83064 Raubling (DE)
(74) Vertreter: Wesel-Mair, Julia (DE)
(86) Internationale Anmeldenummer: EP0001766
(87) Internationale Veröffentlichungsnummer: WO00056578

(56) Entgegenhaltungen:
- DE-A- 19 635 809
- DE-U- 29 801 443
- US-A- 5 362 287
- US-A- 5 481 139

## Beschreibung

Die Erfindung betrifft eine Vorrichtung zur Erhöhung der Sicherheit bei einem Fahrzeug gemäß dem Oberbegriff des Anspruchs 1.

Wird festgestellt, dass die Fahrzeugsicherheit gefährdet ist, sollten im allgemeinen Maßnahmen zur weiteren Sicherstellung der Fahrzeugsicherheit getroffen werden. Dabei werden nachfolgend zwei Gruppen von Situationen bezüglich der Fahrzeugsicherheit unterschieden.

Zum einen kann die Fahrzeugsicherheit ein stabiles Fahrverhalten betreffen. Verfahren und Vorrichtungen zur Verbesserung der Fahrstabilität sind vielfach bekannt.

Aus der DE 196 35 809 A1 ist beispielsweise ein Verfahren und eine Vorrichtung zur Verbesserung der Fahrstabilität im Schubbetrieb bekannt, bei dem bzw. bei der der Antriebsstrang durch Ausrücken einer Reibkupplung dann unterbrochen wird, wenn die Differenz der Raddrehzahlen zwischen angetriebenen und nicht angetriebenen Rädern einen bestimmten Schwellwert überschreitet. Damit lässt sich die Fahrstabilität im Schubbetrieb erhöhen.

Aus der DE 35 28 389 A1 ist eine entsprechende Vorrichtung für eine Antriebsschlupfregelung bekannt.

In der US 5,362,287 ist eine Vorrichtung gemäß dem Oberbegriff des Anspruchs 1 für eine automatische Kupplung beschrieben, bei dem der Antriebsstrang dann unterbrochen wird, wenn ein auf eine Motorbremsung zurückgehender zu großer Radschlupf festgestellt wird.

Bei Automatikgetrieben wird ferner empfohlen, bei einem instabilen Fahrverhalten des Fahrzeugs bzw. einem Schleudervorgang die Getriebeposition "Neutral" von Hand einzulegen, um das Fahrzeug schneller wieder in einen stabilen Zustand zu bringen. Allerdings sind die wenigsten Fahrer in der Lage, bei einem Schleudervorgang eine Hand vom Lenkrad zu nehmen und den Gangwählhebel auf die Position N zu stellen.

Eine weitere Gruppe stellen Fahrsituationen im Sinne von Unfallsituationen dar. Bei Unfallsituationen besteht im allgemeinen die Vorgabe, dass ein Fahrzeug aus Sicherheitsgründen nach einem Unfall stillgesetzt und eine weitere Fahrzeugbewegung vermieden werden sollte.

Zur Lösung dieses Problems sind bereits verschiedene Maßnahmen bekannt. Beispielsweise ist es möglich, die Zündung oder die Kraftstoffzufuhr nach einer Airbagauslösung, die als Indikator für einen Unfall dienen kann, zu unterbrechen. Der Motor wird dann nach einem entsprechenden Ereignis abgeschaltet. Allerdings kann es dabei vorkommen, daß eine Fahrzeugbewegung erst zeitverzögert unterbrochen wird. Überdies besteht die Gefahr, daß eine Störung im Motorsteuergerät vorliegt und/oder die Signalübertragung vom Airbagsteuergerät zum Motorsteuergerät gestört ist.

Ferner ist aus der JP 10103498 ein Airbagsteuergerät bekannt, das einer Getriebesteuerung bei einer Airbagauslösung ein Signal zur Verfügung stellt. Wird der Airbag ausgelöst, so schaltet die Getriebesteuerung das Getriebe in einen Zustand mit niedrigem Momenten-Output

Aufgabe der vorliegenden Erfindung ist es, eine Vorrichtung der eingangs genannten Art zur Erhöhung der Sicherheit bei einem Fahrzeug weiterzubilden, um auch bei Unfällen und Schleudervorgängen die Fahrzeugsicherheit in jedem Fall zu gewährleisten.

Diese Aufgabe wird durch die in Anspruch 1 genannten Merkmale gelöst.

Ein wesentlicher Gedanke der vorliegenden Erfindung liegt darin, den Kraftschluss im Getriebe dann zu unterbrechen, wenn eine Detektionseinrichtung einen Unfall oder eine Schleudersituation ermittelt.

Gemäß einer ersten Ausführungsform der Erfindung wird der Kraftschluss im automatischen Getriebe von der elektrischen Getriebesteuerung bei einem Schleudervorgang ab einer gewissen Schleuderstärke unterbrochen. Bei einer bevorzugten Ausfuhrungsform wird das Getriebe danach in die Neutralstellung geschaltet. Auf diese Weise ist es möglich, den Kraftschluss im Antriebsstrang selbständig und in der erforderlichen Weise zu unterbrechen, um eine hohe Fahrstabilität zu gewährleisten.

Gemäß einer altemativen Ausführungsform der Erfindung wird das Getriebe von der elektrischen Getriebesteuerung bei einer Airbagauslösung und/oder bei einem Überrollvorgang derart angesteuert, dass der Kraftschluss im Getriebe unterbrochen ist. Damit wird sichergestellt, dass eine weitere Fortbewegung des Fahrzeugs selbst dann verhindert wird, wenn der Motor weiterläuft. Die Airbagauslösung bzw. der Überrollvorgang dienen dabei als Indikator für einen Unfallvorgang. Auf die Airbagauslösung kann über eine Überwachung eines Crash-Sensors direkt oder die Reaktion eines Airbagsteuergerätes geschlossen werden. In diesem Sinne wird eine Airbagauslösung auch dann angenommen, wenn Signale detektiert werden, die zur Airbagauslösung führen.

Von besonderem Interesse im obigen Zusammenhang ist eine Ausführungsform, bei der eine automatisch betätigbare Parksperre vorgesehen ist,
die ebenfalls von einem Steuergerät angesprochen wird und die dann eingelegt wird, wenn nach einem Airbagauslösevorgang und/oder einem Überrollvorgang das Fahrzeug zum Stillstand gekommen ist. Zur Kenntnis und Miteinbeziehung der Fahrzeuggeschwindigkeit kann dabei ein normalerweise vorhandener Fahrzeuggeschwindigkeitssensor ausgewertet werden. Natürlich kann die Parksperre auch aufgrund anderer Kriterien eingelegt werden. Überdies ist es auch möglich, die Parksperre gleich dann einzulegen, wenn der Kraftschluß infolge des Airbagauslösevorgangs oder des Überrollvorgangs unterbrochen worden ist. In diesem Zusammenhang wird auch auf die DE 196 25 019 A1 hingewiesen, in der unter anderem ein automatisches Aktivieren der Parksperre beschrieben ist. Durch das Aktivieren der Parksperre wird ein Wegrollen nach einem Stillstand des Fahrzeugs wirkungsvoll verhindert.

Gemäß einer weiteren bevorzugten Ausführungsform ist eine Getriebewähleinrichtung vorgesehen, die eine definierte Ruhestellung besitzt und zum Auswählen einer vom Fahrer gewünschten Fahrstufe aus ihrer Ruhelage auslenkbar ist, in die sie dann wieder selbständig zurückgekehrt. Wird der Kraftschluß unterbrochen bzw. wird getriebeseitig in die Neutrafstellung geschaltet, so wird der Fahrer nicht durch unterschiedliche Einstellungen der Getriebewähleinrichtung einerseits und des Getriebes andererseits verwirrt. Durch fehlende Raststellungen treten auch keine Synchronisationsprobleme auf.

Weitere Ausführungsformen sind in den Unteransprüchen definiert.

Zwei einfache Ausführungsformen der vorliegenden Erfindung werden mit Bezug auf die beiliegenden Zeichnungen näher erläutert. Die Zeichnungen zeigen in
- Fig. 1: eine blockschematische Darstellung einer erfindungsgemäßen Vorrichtung zur Erhöhung der Fahrstabilität und
- Fig. 2: eine blockschematische Darstellung einer zweiten Ausführungsform der erfindungsgemäßen Vorrichtung zur Erhöhung der Sicherheit.

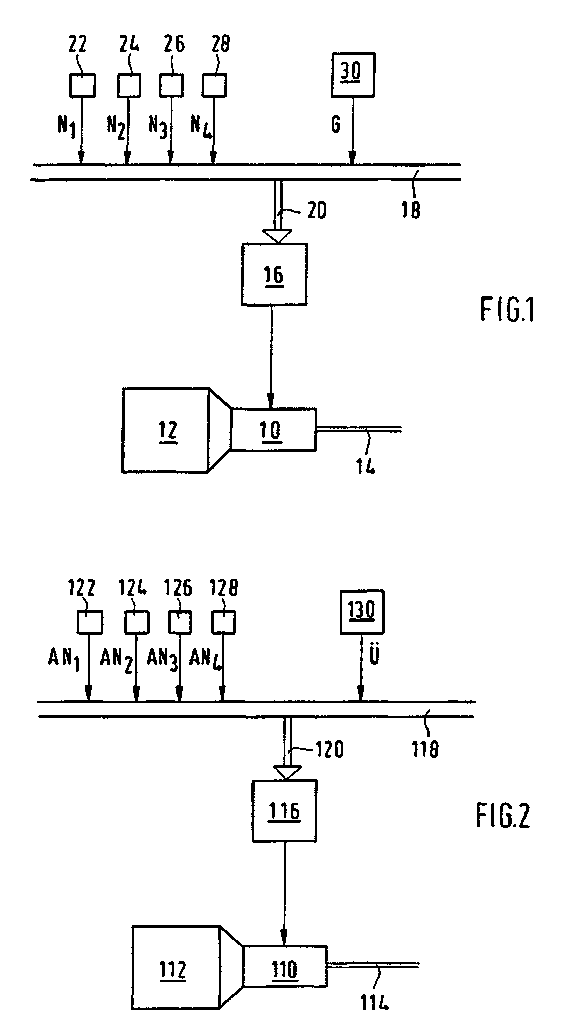

Gemäß Fig. 1 ist ein Verbrennungsmotor 12, welcher direkt mit einem Getriebe 10 gekoppelt ist, in einem nicht dargestellten Fahrzeug angeordnet. Vom Getriebe 10 geht eine Abtriebswelle 14 in Richtung der nicht dargestellten Räder.

Bei dem Getriebe handelt es sich um ein Stufenautomatikgetriebe, welches mittels einer elektrischen Getriebesteuerung 16 geschaltet wird. Die Getriebesteuerung 16 erhält ihre Eingangsinformationen von einem Bus 18 (z.B. CAN-Bus). Sie besitzt ein nicht näher beschriebenes Interface, das mit dem Bus 18 gekoppelt ist (Bezugsziffer 20) und das die benötigten Informationen aus den auf dem Bus vorliegenden Informationen ausfiltert.

Auf dem Bus 20 liegen bei dem ersten Ausführungsbeispiel Informationen über die Raddrehzahlen N₁ bis N₄ an, welche von entsprechenden Raddrehzahlsensoren 22 bis 28 in den Bus 18 eingespeist werden. Überdies liegt auf dem Bus 20 eine Information über die Gierrate G, welche von einem Giersensor 30 eingespeist wird.

Die elektrische Getriebesteuerung 16 ermittelt nun kontinuierlich einen Schleuderwert aus den Signalen N₁ bis N₄ und G und vergleicht diesen Schleuderwert mit einem in der Getriebesteuerung 16 gespeicherten Grenzwert. Übersteigt der Schleuderwert den vorgegebenen Grenzwert, so schaltet es das Getriebe 10 in seine Neutralstellung, wodurch der Kraftschluß im Antriebsstrang unterbrochen wird.

Alternativ können natürlich auch die Signale anderer Sensoren oder Erfassungsmittel ausgewertet werden, die auf einen Schleudervorgang schließen lassen.

In bestimmten kritischen Situationen, in denen eine Unterbrechung des Antriebsstranges hilfreich ist, muß der Fahrer das Getriebe somit nicht mehr manuell in die Neutralstellung schalten. Vielmehr wird dies vom Fahrzeug selbst durchgeführt.

Eine alternative Ausführungsform der Erfindung ist in Fig. 2 dargestellt. In einem ebenfalls nicht dargestellten Fahrzeug ist hierbei ein Verbrennungsmotor 112 angeordnet, welcher wiederum direkt mit einem Getriebe 110 gekoppelt ist. Vom Getriebe 110 geht eine Abtriebswelle 114 in Richtung der nicht dargestellten Räder.

Bei dem Getriebe 114 handelt es sich um ein Stufenautomatikgetriebe, welches mittels einer elektrischen Getriebesteuerung 116 geschalten wird. Die Getriebesteuerung 116 erhält ihre Eingangsinformationen von einem Bus 118. Sie besitzt ein nicht näher beschriebenes Interface, das mit dem Bus 118 gekoppelt ist (Bezugsziffer 120) und das die benötigten Informationen aus den auf dem Bus vorliegenden Informationen ausfiltert.

Auf dem Bus 120 liegen bei dem zweiten Ausführungsbeispiel Informationen über Airbagauslösungen, nämlich Signale AN₁ bis AN₄ an, welche von entsprechenden Airbagauslösegeräten 122 bis 128, z.B. Crash-Sensoren oder einem Airbagsteuergerät, in den Bus 118 eingespeist werden. Überdies liegt auf dem Bus 120 eine Information über einen Überrollvorgang Ü vor, welche von einem Überrollsensor 130 eingespeist wird.

Die elektrische Getriebesteuerung 116 überwacht nun kontinuierlich die vorliegenden Airbagauslöse- und Überrollsignale. Wird eine Airbagauslösung oder ein Überrollvorgang erfaßt, so schaltet es das Getriebe 110 so, daß der Kraftschluß darin unterbrochen wird. Damit wird kein Moment mehr vom Motor 112 auf die Antriebsräder übertragen und eine Weiterbewegung des Fahrzeugs wirkungsvoll unterbunden.

Alternativ können natürlich auch die Signale anderer Sensoren oder Erfassungsmittel ausgewertet werden, aus denen man dann auf eine Situation schließen kann, bei der der Kraftschluß im Getriebe unterbrochen werden sollte.

In kritischen Situationen, in denen eine Unterbrechung des Kraftschlusses im Antriebsstrang bzw. im Getriebe hilfreich ist, muß der Fahrer das Getriebe somit nicht mehr manuell in die Neutralstellung schalten. Vielmehr wird vom Fahrzeug selbst eine Unterbrechung des Antriebsstranges und in einer Weiterbildung eine Blockierung der Räder erreicht.

Da sich die oben beschriebenen Applikationen durch eine entsprechende Modifikation der Getriebesoftware realisieren lassen, ist eine besonders kostengünstige Verwirklichung möglich.

## Patentansprüche

1. Vorrichtung zur Erhöhung der Sicherheit bei einem Fahrzeug mit
- einem automatischen Getriebe (10, 110), das von einer elektrischen Getriebesteuerung (16, 116) beaufschlagt wird, und
- mit einer Detektionseinrichtung (22 - 30, 120 -130) zur Erfassung einer Fahrsituation und Erzeugung eines entsprechenden Signals, wobei
eine Auswertevorrichtung vorgesehen ist, die überprüft, ob das erzeugte Signal einen bestimmten Wert erreicht oder eine bestimmte Schwelle überschreitet, und die die Getriebesteuerung (16, 116) bei Erreichen des Wertes oder Überschreiten der Schwelle veranlasst, den Kraftschluss im Getriebe zu unterbrechen,
**dadurch gekennzeichnet, daß**
die Fahrsituation ein Unfall oder ein Schlendervorgang ist.

2. Vorrichtung nach Anspruch 1,
**dadurch gekennzeichnet,**
**daß** es sich bei der Detektionseinrichtung um ein Element einer Airbagauslösevorrichtung (122 - 128) handelt, und der Kraftschluß dann unterbrochen wird, wenn eine Airbagauslösung oder ein zur Airbagauslösung führendes Signal detektiert wird.

3. Vorrichtung nach einem der Ansprüche 1 oder 2,
**dadurch gekennzeichnet,**
**daß** die Airbagauslösevorrichtung zumindest einen Crash-Sensor und/oder eine Airbagsteuervorrichtung umfaßt, deren Signale zur Detektion der Auslösung des Airbags verwendet sind.

4. Vorrichtung nach einem der Ansprüche 1 bis 3,
**dadurch gekennzeichnet,**
**daß** es sich bei der Detektionseinrichtung um einen Überrollsensor (130) handelt, und der Kraftschluß dann unterbrochen wird, wenn ein Überrollvorgang detektiert wird.

5. Vorrichtung nach einem der Ansprüche 2 bis 4,
**dadurch gekennzeichnet,**
**daß** eine automatische Parksperre vorgesehen ist, die bei einer Kraftschlußunterbrechung aktiviert wird.

6. Vorrichtung nach Anspruch 5,
**dadurch gekennzeichnet,**
**daß** ein Fahrzeuggeschwindigkeitssensor vorgesehen ist und die automatische Parksperre dann aktiviert wird, wenn zusätzlich das Fahrzeug im wesentlichen zur Ruhe gekommen ist.

7. Vorrichtung nach Anspruch 1,
**dadurch gekennzeichnet,**
**daß** es sich bei der Detektionseinrichtung um eine Einrichtung zur Erzeugung eines einen Schleudervorgang beschreibenden Wertes handelt, und der Kraftschtuß dann unterbrochen wird, wenn der Schleuderwert einen bestimmten Schwellwert überschreitet.

8. Vorrichtung nach Anspruch 7,
**dadurch gekennzeichnet,**
**daß** die Getriebesteuerung (16, 116) das Getriebe (10, 110) bei einer Kraftschlußunterbrechung in die Neutralstellung schaltet.

9. Vorrichtung nach Anspruch 7 oder 8,
**dadurch gekennzeichnet,**
**daß** die Detektionseinrichtung Raddrehzahlsensoren (22 - 28) und/oder einen Gierratensensor (30) umfaßt.

10. Vorrichtung nach einem der vorhergehenden Ansprüche,
**dadurch gekennzeichnet,**
**daß** die Auswertevorrichtung in der Getriebesteuerung (16, 116) integriert ist.

11. Vorrichtung nach einem der vorhergehenden Ansprüche,
**dadurch gekennzeichnet,**
**daß** eine Gangwähleinrichtung vorgesehen ist, die eine definierte Ruhestellung besitzt und zum Auswählen einer vom Fahrer gewünschten Fahrstufe aus ihrer Ruhelage ausgelenkt wird, in die sie dann wieder selbständig zurückgekehrt.

## Claims

1. Device for increasing the safety of a vehicle, having
- an automatic gearbox (10, 110) acted upon by an electrical gearbox control system (16, 116), and
- with a detection device (22-30, 120-130) for detecting a drive situation and creating a suitable signal, whereby
an evaluation device is provided which checks whether the signal generated reaches a particular value or exceeds a particular threshold, and which on reaching the value or exceeding the threshold causes the gearbox control system (16, 116) to interrupt the frictional connection in the gearbox, **characterised in that** the drive situation is an accident or a spin event.

2. Device according to Claim 1, **characterised in that** the detection device is an element of an airbag triggering device (122-128) and the frictional connection is interrupted if an airbag triggering or a signal leading to airbag triggering is detected.

3. Device according to one of the claims 1 or 2, **characterised in that** the airbag triggering device includes at least one crash sensor and/or one airbag control device whose signals are used for detecting the triggering of the airbag.

4. Device according to one of the claims 1 to 3, **characterised in that** the detection device is a rollover sensor (130) and the frictional connection is interrupted if a rollover event is detected.

5. Device according to one of the claims 2 to 4, **characterised in that** an automatic parking lock is provided with which a frictional connection interruption is activated.

6. Device according to Claim 5, **characterised in that** a vehicle speed sensor is provided and the automatic parking lock is activated when the vehicle has also substantially come to rest.

7. Device according to Claim 1, **characterised in that** the detection device is a device for generating a value describing a spin event, and the frictional connection is interrupted if the spin value exceeds a particular threshold level.

8. Device according to Claim 7, **characterised in that** the gearbox control system (16, 116) of the gearbox (10, 110) switches into the neutral position in the event of a frictional connection interruption.

9. Device according to Claim 7 or 8, **characterised in that** the detection device comprises wheel speed sensors (22-28) and/or a yawing rate sensor (30).

10. Device according to one of the previous claims, **characterised in that** the evaluation device is integrated into the gearbox control system (16, 116).

11. Device according to one of the previous claims, **characterised in that** a gear selection device is provided which has a defined rest position and, for selecting a gear level desired by the driver, is displaced from its rest position, to which it then automatically returns.

## Revendications

1. Dispositif pour augmenter la sécurité d'un véhicule comprenant :
- une boîte de vitesses automatique (10, 110) sollicitée par une commande électrique de boîte de vitesses (16, 116), et
- une installation de détection (22-30 ; 120-130) pour saisir une situation de conduite et générer un signal correspondant,
- un dispositif d'exploitation vérifiant si le signal atteint une certaine valeur ou dépasse un certain seuil et qui, lorsque la commande de boîte de vitesses (16, 116) atteint la valeur ou dépasse le seuil, produit la coupure de la transmission de la force dans la boîte de vitesses,
**caractérisé en ce que**
la situation de conduite est un accident ou un dérapage.

2. Dispositif selon la revendication 1,
**caractérisé en ce que**
l'installation de détection est un élément d'un dispositif de déclenchement de coussins gonflables (122-128) et la transmission de force est coupée si un déclenchement de coussins gonflables ou un signal aboutissant à un déclenchement de coussins gonflables est détecté.

3. Dispositif selon l'une quelconque des revendications 1 ou 2,
**caractérisé en ce que**
le dispositif de déclenchement de coussins gonflables comprend au moins un capteur de collision et/ou un dispositif de commande de coussins gonflables dont les signaux sont utilisés pour détecter le déclenchement d'un coussin gonflable.

4. Dispositif selon l'une quelconque des revendications 1 à 3,
**caractérisé en ce que**
l'installation de détection est un capteur de retournement (130) et le flux des forces est alors interrompu lorsqu'on détecte une phase de retournement.

5. Dispositif selon l'une quelconque des revendications 2 à 4,
**caractérisé par**
un verrouillage automatique de stationnement qui est activé par une coupure de la transmission de la force.

6. Dispositif selon la revendication 5,
**caractérisé par**
un capteur de vitesse de véhicule qui permet d'activer le verrouillage automatique de stationnement si en plus le véhicule est pratiquement au repos.

7. Dispositif selon la revendication 1,
**caractérisé en ce que**
l'installation de détection est une installation générant une valeur décrivant une phase de dérapage et on coupe la transmission de la force si la valeur de dérapage dépasse un seuil déterminé.

8. Dispositif selon la revendication 7,
**caractérisé en ce que**
la commande de boîte de vitesses (16, 116) commute la boîte de vitesses (10, 110) en position neutre lors d'une coupure de la transmission de la force.

9. Dispositif selon la revendication 7 ou 8,
**caractérisé en ce que**
l'installation dé détection comporte des capteurs de vitesse de rotation de roues (22-28) et/ou un capteur de vitesse de lacet (30).

10. Dispositif selon l'une des revendications précédentes,
**caractérisé en ce que**
le dispositif d'exploitation est intégré dans la commande (16, 116) de la boîte de vitesses.

11. Dispositif l'une des revendications précédentes,
**caractérisé par**
une installation de sélection de rapports de vitesses, qui possède une position de repos, déterminée et qui est déboîtée de sa position de repos pour sélectionner un rapport de vitesses souhaité par le conducteur, pour revenir automatiquement dans cette position de repos.
